(19) Europäisches Patentamt
European Patent Office
Office européen des brevets

(11) Veröffentlichungsnummer: **0 000 898**
**B1**

(12) **EUROPÄISCHE PATENTSCHRIFT**

(45) Veröffentlichungstag der Patentschrift: **03.02.82**

(21) Anmeldenummer: **78100620.0**

(22) Anmeldetag: **07.08.78**

(51) Int. Cl.³: **D 06 P 1/52,** C 08 G 63/68, D 06 P 1/613, D 06 P 3/54, D 06 P 3/82

# (54) Egalisiermittel und Verfahren zum Färben von synthetischen Fasermaterialien.

(30) Priorität: **18.08.77 DE 2737260**

(43) Veröffentlichungstag der Anmeldung:
**07.03.79 Patentblatt 79/5**

(45) Bekanntmachung des Hinweises auf die Patenterteilung:
**03.02.82 Patentblatt 82/5**

(84) Benannte Vertragsstaaten:
**BE CH DE FR GB NL**

(56) Entgegenhaltungen:
**DE - A - 2 653 284**
**DE - B - 2 508 472**
**FR - A - 1 536 648**
**FR - A - 2 262 064**
**FR - A - 2 351 142**

(73) Patentinhaber: **CASSELLA Aktiengesellschaft**
**Hanauer Landstrasse 526**
**D-6000 Frankfurt am Main 61 (DE)**

(72) Erfinder: **Weckler, Gerhard, Dr.**
**Billtalstrasse 36**
**D-6231 Sulzbach (DE)**
Erfinder: **Hauss, Hans Joachim**
**Simsonstrasse 7**
**D-6000 Frankfurt am Main (DE)**
Erfinder: **Hintermeier, Karl, Dr.**
**Hünfelder Strasse 18**
**D-6000 Frankfurt am Main (DE)**
Erfinder: **Engelhardt, Fritz, Dr.**
**Hünfelder Strasse 20**
**D-6000 Frankfurt am Main (DE)**

(74) Vertreter: **Urbach, Hans-Georg, Dr. et al,**
**Hanauer Landstrasse 526**
**D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 898 B1

# Egalisiermittel und Verfahren zum Färben von synthetischen Fasermaterialien

Die Erfindung betrifft ein Egalisiermittel und ein Verfahren zum gleichmäßigen Färben von Materialien aus Synthesefasern, wie z.B. Fasern aus Cellulosetriacetat, Polyurethan, Polyamiden, insbesondere aber von Fasern aus linearen Polyestern und deren Mischungen mit natürlichen Fasern mit Dispersionsfarbstoffen.

Es ist ein Verfahren zum gleichmäßigen Färben von Fasermaterial aus linearen Polyestern und deren Mischungen mit natürlichen Fasern mit wasserunlöslichen Dispersionsfarbstoffen nach der Ausziehmethode bekannt (deutsche Auslegesschrift 25 08 472), bei dem man den wäßrigen Färbebädern neben den genannten Farbstoffen und pH-regulierenden Substanzen noch als Egalisiermittel in Wasser lösliche oder dispergierbare lineare Polyester mit einem durchschnittlichen Molekulargewicht von 800 bis 5000, die durch Polykondensation von

a) einer oder mehreren gesättigten oder ungesättigten aliphatischen, cycloaliphatischen oder aromatischen Dicarbonsäure(n) mit

b) einem oder mehreren gesättigten oder ungesättigten aliphatischen, cycloaliphatischen oder aromatischen Diol(en)

erhalten worden sind und wobei 5 bis 30 Mol-% aller Dicarbonsäure- oder Diol-Kettenglieder Sulfogruppen bzw. deren Salze tragen, in Mengen von 0,1 bis 5 g/l zusetzt.

Es ist auch schon vorgeschlagen worden, bei einem derartigen Verfahren als Dispergiermittel anstelle des in Wasser löslichen oder dispergierbaren linearen Polyesters einen in Wasser löslichen oder dispergierbaren verzweigten, sulfonatgruppenhaltigen Polyester mit einem Molekulargewicht von 600 bis 5000 zu verwenden, bei dessen Herstellung, bezogen auf 100 Mol-% der Polycarbonsäurekomponente, 1 bis 40 Mol-% verzweigende Komponenten, d.h. beispielsweise Tricarbonsäuren, Tetracarbonsäuren, Trialkohole bzw. Tetraalkohole, eingesetzt werden.

Mit den vorgenannten Verfahren lassen sich Abfiltrationen der Farbstoffe bzw. Unegalitäten der gefärbten Waren verhindern. Es wurde nun überraschenderweise gefunden, daß die Wirksamkeit dieser Verfahren weiter verbessert werden kann, wenn bei diesen Verfahren zusätzlich ein Äthoxylierungsprodukt des Rizinusöls verwendet wird. Demgemäß betrifft die Erfindung ein Egalisiermittel und ein Verfahren zum gleichmäßigen Färben von Materialien aus Synthesefasern oder deren Mischungen mit natürlichen Fasern mit Dispersionsfarbstoffen, wobei das erfindungsgemäße Verfahren dadurch gekennzeichnet ist, daß man den wäßrigen Färbebädern neben den genannten Farbstoffen und pH-regulierenden Substanzen noch als Egalisiermittel ein Gemisch, bestehend aus

A) einem in Wasser löslichen oder dispergierbaren linearen oder verzweigten Polyester mit einem durchschnittlichen Molekulargewicht von 600 bis 5000, der durch Polykondensation von

a) 100 Mol-% einer oder mehreren gesättigten oder ungesättigten aliphatischen, cycloaliphatischen oder aromatischen Di- und gegebenenfalls Polycarbonsäure(n) mit

b) 90 bis 120 Mol-% eines oder mehrerer gesättigten oder ungesättigten aliphatischen, cycloaliphatischen oder araliphatischen Di- und gegebenenfalls Polyols (Polyole) und/oder äthergruppenhaltigen gesättigten aliphatischen, cycloaliphatischen oder araliphatischen Diols (Diole) erhalten worden ist und wobei bis 0 Mol-%, vorzugsweise 5 bis 30 Mol-%, aller Di- und Polycarbonsäure- oder Di- oder Polyolkettenglieder Sulfogruppen in Form von Salzen tragen, und

B) einem mit 5 bis 50 Mol Äthylenoxid oxäthylierten Ricinusöl im Gewichtsverhältnis A:B = 1:(0,1 bis 5), vorzugsweise 1:(0,5 bis 2) in Mengen von 0,02 bis 5 g/l, vorzugsweise von 0,05 bis 2 g/l, zusetzt.

Die wasserlöslichen bzw. in Wasser dispergierbaren linearen Polyester können in an sich bekannter Weise durch Polykondensation von 100 Mol-% von Dicarbonsäuren mit 90 bis 120 Mol-% Diolen, wobei insgesamt 5 bis 40 Mol-%, vorzugsweise 5 bis 30 Mol-% der Dicarbonsäuren und/oder der Dihydroxyverbindungen Sulfogruppen in Form von Salzen tragen müssen, hergestellt werden.

Als Dicarbonsäuren können gesättigte und ungesättigte aliphatische, cycloaliphatische, araliphatische oder aromatische Dicarbonsäuren eingesetzt werden. Bevorzugt werden Dicarbonsäuren mit 4 bis 10 Kohlenstoffatomen, insbesondere die Benzoldicarbonsäuren. Beispiele für geeignete Dicarbonsäuren sind: Bernsteinsäure, Glutarsäure, Adipinsäure, Korksäure, Maleinsäure, Fumarsäure, Itakonsäure, Cyclohexandicarbonsäure-1,4, Cyclohexandicarbonsäure-1,3, Phthalsäure, Isophthalsäure, Terephthalsäure, die Naphthalindicarbonsäuren, wie z.B. 1,4-Naphthalindicarbonsäure, 1,5-Naphthalindicarbonsäure, ferner Diphensäure, Norbornandicarbonsäure usw. Anstelle der Dicarbonsäuren können auch deren Derivate, wie Anhydride, Säurehalogenide, insbesondere Säurechloride, Ester, insbesondere solche mit leicht abdestillierbaren Alkoholen mit 1 bis 4 C-Atomen, eingesetzt werden.

Vorzugsweise wird ein Gemisch von Dicarbonsäuren und/oder Dicarbonsäurederivaten eingesetzt. Geeignete Ester, Anhydride und Säurechloride sind zum Beispiel: Terephthalsäure-dimethylester, Terephthalsäure-diäthylester, Terephthalsäuredipropylester, Terephthalsäure-de-isopropylester, Terephthalsäure-dibutylester, Isophthalsäure-dimethylester, Isophthalsäure-diäthylester, Isophthalsäure-dipropylester, Isophthalsäure-dibutylester, Phthalsäure-dimethylester, Phthalsäure-diäthylester, Phthalsäure-dipropylester, Phthalsäure-di-isopropylester, Phthalsäuredibutylester, Malonsäure-dimethyl-, -diäthyl-, -dipropyl- oder -dibutylester, Bernsteinsäuredimethyl- oder -dibutylester, Glutarsäurediäthyl-oder -diisopropylester, Adipinsäure-diäthyl- oder -di-isobutylester, Pimelinsäure-dimethyl-, -diisopropyl- oder -di-butylester, Korksäure-dimethyl, -diäthyl-, -dipropyl- oder -di-butylester, 1,4-Cyclohexan-di-carbonsäure-dimethyl-, -diäthyl-, -dipropyl-, -dibutylester, 1,2-Cyclohexan-dicarbonsäure-dimethyl-, -diäthyl-, dipropyl-, -dibutylester, 1,3-Cyclohexan-dicarbonsäure-dimethyl-, -diäthyl-, -dipropyl-, -dibutylester, Phthalsäure-anhydrid, Maleinsäureanhydrid, Bernsteinsäure-anhydrid, Phthalylchlorid.

Geeignete Ester können auch solche mit den nachstehend aufgeführten Diolen als Alkoholkomponente sein.

Als Diole für die erfindungsgemäß zu verwendenden linearen Polykondensate eignen sich gesättigte, ungesättigte aliphatische, cycloaliphatische und araliphatische Verbindungen, vorzugsweise solche mit 2 bis 10 Kohlenstoffatomen, vor allem gesättigte aliphatische, cycloaliphatische oder araliphatische Verbindungen mit Ätherbrücken. Bei den äthergruppenhaltigen Verbindungen bezieht sich aber der angegebene, beforzugte Bereich von 2 bis 10 Kohlenstoffatomen lediglich auf jeden einzelnen der aliphatischen Teile zwischen 2 Ätherbrücken bzw. Sauerstoffatomen.

Beispiele für geeignete Diole sind: Äthylenglykol, Propandiol-1,2 und Propandiol-1,3, Äthylenglykol-mono-(3-hydroxy-propyl)äther, Äthylenglykol-mono-(3-hydroxy-propyl-2)äther, Äthylenglykol-mono-(2-hydroxy-propyl)äther, Butandiole, insbesondere Butandiol-1,4, Pentandiole, wie Pentandiol-1,5, Hexandiole, insbesondere Hexandiol-1,6, Decandiol-1,10, Diäthylenglykol, Dipropylenglykol, Bis(3-hydroxypropyl)-äther, Triäthylenglykol, Tetraäthylenglykol, Tripropylenglykol, 4,8-Dioxadecan-1,10-diol, Polyäthylenglykole vom Molekulargewicht 300 bis 2000, Polypropylenglykole vom Molekulargewicht 300 bis 2000, Polyäther des Propandiols-1,3 und gemischte Polyäther des Athylenglykols mit Propylenglykol und/oder gegebenenfalls Propandiol-1,3, wobei die genannten Polyäther Molekulargewichte von 300 bis 2000 besitzen, Bis-(4-hydroxy-butyl)-äther, 2-Methylenpropandiol-1,3, 2,4-Dimethyl-2-äthyl-hexandiol-1,3, 2-Äthyl-2-butyl-propandiol-1,3, 2,2-Dimethyl-propandiol-1,3, 2-Äthyl-2-isobutyl-propandiol-1,3, 2,2,4-Trimethyl-hexandiol-1,6, 1,3-Dihydroxy-cyclohexan, 1,4-Dihydroxy-cyclohexan (Chinit), 1,4-Bis-(hydroxymethyl)cyclohexan, 1,3-Bis(hydroxymethyl)cyclohexan, 1,2-Bis-(hydroxymethyl)cyclohexan, 1,4-Bis(hydroxymethyl)benzol, 1,3-Bis(hydroxymethyl)benzol, 2,6-Bis-(hydroxymethyl)naphthalin.

Ferner sind beispielsweise Diphenole geeignet, die durch beiderseitige Umsetzung mit Äthylenoxid in araliphatische Bishydroxyverbindungen übergeführt worden sind und denen z.B. die allgemeine Formel

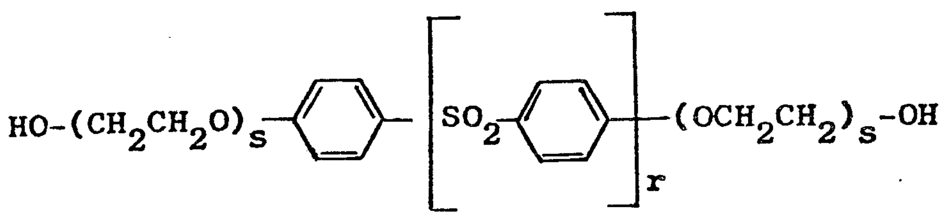

worin r = 0 oder 1
s = 1, 2, 3 oder 4 ist,

zugeordnet werden kann. Vertreter derartiger Produkte sind beispielsweise:

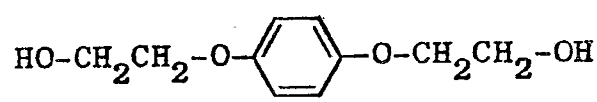

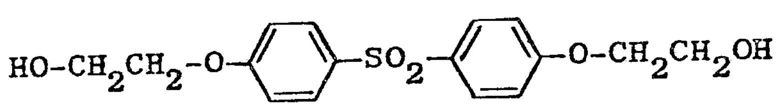

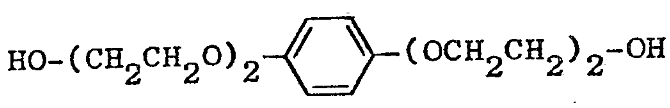

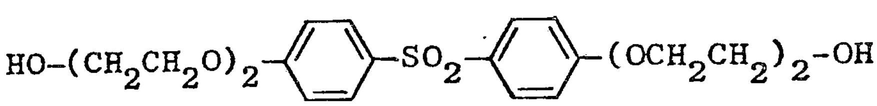

sowie auch andere, beidseitig mehrfach oxäthylierte Produkte.

Bevorzugte Diolkomponente ist das Diäthylenglykol, daneben auch das Triäthylenglykol. Auch die Diole können zweckmäßigerweise als Gemische, z.B. als Gemisch aus Diäthylen- und Triäthylenglykol eingesetzt werden. Andere bevorzugte Gemische enthalten 40 bis 95 Mol-% diäthylen- und/oder Triäthylenglykol und 5 bis 60 Mol-% andere Diole insbesondere solche mit mehr als 2 Ätherbrücken und besonderes vorteilhaft Polyäthylenglykol vom durchschnittlichen Molekulargewicht 300 bis 1000.

Ein aliquoter Teil der Dicarbonsäuren und der Diole kann durch Hydroxycarbonsäuren ersetzt werden, die vorzugsweise 2 bis 11 C-Atome enthalten.

Beispiele für geeignete Hydroxycarbonsäuren sind: Glykolsäure, Milchsäure, 3-Hydroxypropionsäure, 4-Hydroxybuttersäure, 5-Hydroxypenten-3-säure, Mandelsäure, 3-Hydroxymethyl-cyclohexancarbonsäure, 4-Hydroxymethyl-cyclohexancarbonsäure, 6-Hydroxymethyl-decalin-carbonsäure(-2). 3-Hydroxyäthyl-benzoesäure,

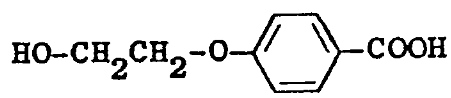

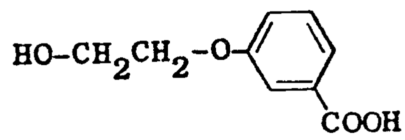

Auch Derivate von Hydroxycarbonsäuren, wie z.B. Ester, können eingesetzt werden.

Als Beispiel für geeignete Ester von Hydroxycarbonsäuren sind zu nennen: Milchsäure-methylester, Milchsäureäthylester, 4-Hydroxybuttersäure-methylester, Mandelsäure-äthylester,

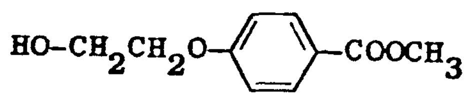

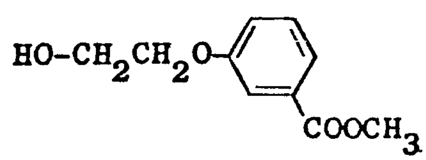

Soweit Hydroxycarbonsäuren bzw. deren Derivate eingesetzt werden, werden bevorzugt höchstens 40 Mol-% des Dicarbonsäure- und Diolgehalts durch Hydroxycarbonsäuren bzw. deren Derivate ersetzt.

Als Bausteine, die Sulfogruppen in Form von Salzen, insbesondere in Form von alkali-, Ammonium-, substituierten Ammonium- oder Triäthanolammonium-salzen tragen, können aliphatische, cycloaliphatische oder aromatische Dicarbonsäuren, aliphatische, cycloaliphatische oder araliphatische Diole, Hydroxycarbonsäuren und, soweit es sich um Carbonsäuren handelt, auch deren Derivate, insbesondere Ester verwendet werden. Beispiele für derartige Verbindungen sind: Natriumsulfonatobernsteinsäure, Kalium-sulfonatobernsteinsäure, Ammoniumsulfonatobernsteinsäure, 4-Natriumsulfonatophthalsäure, 4-Natriumsulfonatophthalsäureanhydrid, 4-Kaliumsulfonatophthalsäure, 2-Natriumsulfonatoterephthalsäure, 2-Natriumsulfonatoterephthalsäure-dichlorid, 5-Natriumsulfonatoisophthalsäure, 5-Natriumsulfonatopropoxyisophthalsäure, 5-natriumsulfonatoäthoxy-isophthalsäure, Natriumsulfonatobernsteinsäure-dimethylester, Natriumsulfonatobernsteinsäurediäthylester, 4-Natriumsulfonatophthalsäure-diäthylester, 4-Natriumsulfonatophthalsäure-dimethylester, 4-Ammoniumsulfonatophthalsäure-dimethylester, 2-Natriumsulfonatoterephthalsäure-diäthylester, 5-Natriumsulfonatoisophthalsäure-dimethylester, 5-Natriumsulfonatopropoxy-isophthalsäure-dimethylester, 5-Natriumsulfonatoäthoxy-isophthalsäure-diäthylester, 5-Natriumsulfonatoäthoxy-isophthalsäure-diisopropylester, 5-Kaliumsulfonatoäthoxy-isophthalsäure-di-n-propylester,

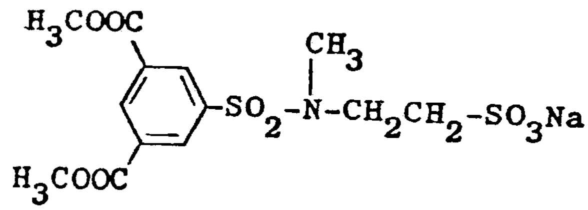

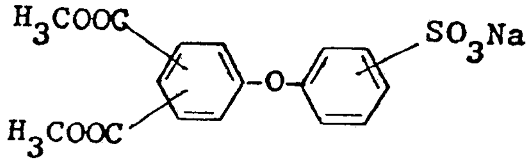

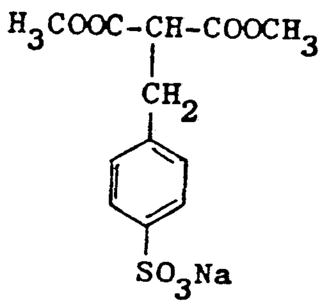

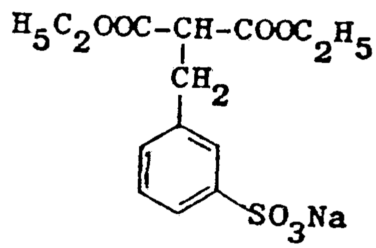

Als Beispiele für sulfonatogruppentragende Hydroxycarbonsäuren bzw. deren Ester sind zu nennen: 5-Natriumsulfonatosalizylsäure, 5-Natriumsulfonato-benzoesäuremethylester,

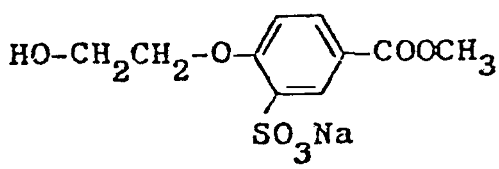

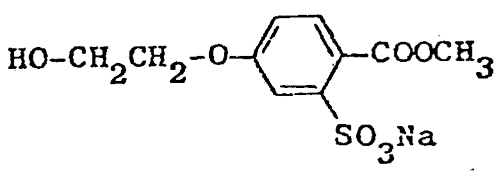

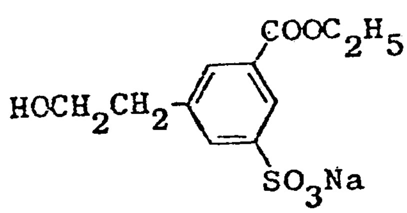

Ferner sind z.B. folgende sulfonatogruppenhaltige Diole bzw. äthoxylierte Diphenole geeignet:

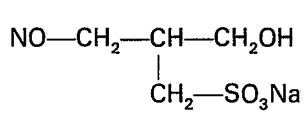

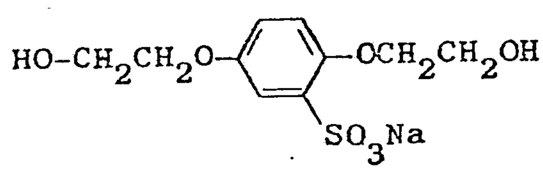

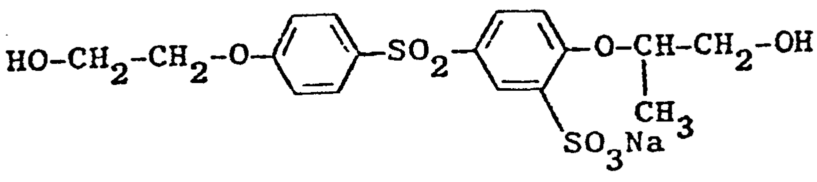

Dinatrium-3,6-disulfonato-2,7-dihydroxynaphthalin, Dinatrium-3,6-disulfonato-1,8-dihydroxynaphthalin.

Bevorzugt sind für den erfingungsgemäßen Zweck lineare Polyester der nachstehenden allgemeinen Formel

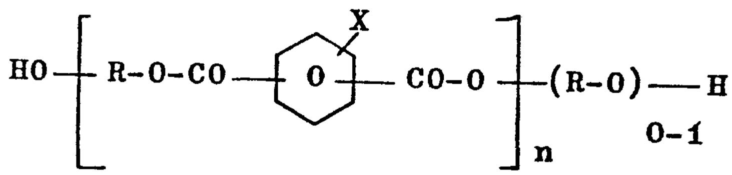

worin bedeuten

X = —H, —O—$CH_2$—$CH_2$—$CH_2$—$SO_3M$ oder —$SO_3M$

M = Alkalimetall, Ammonium,

R = ein Diolradikal (vgl. Aufzählung S. 5 bis 6) einer gesättigten oder ungesättigten aliphatischen, cycloaliphatischen oder araliphatischen Verbindung mit 2 bis 10 Kohlenstoffatomen und/oder einer äthergruppenhaltigen gesättigten aliphatischen, cycloaliphatischen oder araliphatischen Verbindung mit 2 bis 10 Kohlenstoffatomen in den aliphatischen Teilen zwischen zwei Sauerstoffatomen und

n = so groß ist, daß das mittlere Molekulargewicht des Polyesters zwischen 800 und 5000 liegt.

Besonders bevorzugt werden dabei wasserlösliche Polyester, in denen 10 bis 20 Mol-% der phenylenreste durch Einkondensieren von 5-Natriumsulfonatopropoxy-isophthalsäuredimethylester oder 5-Natriumsulfonato-isophthalsäuredimethylester,

40 bis 90 Mol-% durch Einkondensieren von Isophthalsäure oder ihrer Derivate, und

0 bis 40 Mol-% durch Einkondensieren von Terephthalsäure, bevorzugt in Form des Dimethylesters, erhalten werden, sowie

40 bis 100 Mol-% der eingesetzten Diole Diäthylen- und/oder Triäthylenglykol und

0 bis 60 Mol-% ein oder mehrere andere Diole, insbesondere solche mit mehr als 2 Ätherbrücken und besonders vorteilhaft Polyäthylenglykol vom durchschnittlichen Molekulargewicht 300 bis 1000 sind.

Eine Variation der obigen allgemeinen Formel besteht darin, daß man 0 bis 40 Mol-% des gesamten Anteils an Benzoldicarbonsäuren in der Formel durch eine aliphatische oder cycloaliphatische Dicarbonsäure mit 4 bis 10 Kohlenstoffatomen ersetzt. Anstelle der linearen Polyester, die für die Herstellung des erfindungsgemäßen Egalisiermittels bevorzugt sind, können auch verzweigte, wasserlösliche bzw. in Wasser dispergierbare Polyester verwendet werden, die im Prinzip wie die vorgenannten linearen Polyester hergestellt werden, nur muß bei ihrer Herstellung mindestens eine verzweigende Komponente eingesetzt werden.

Solche verzweigenden Komponenten können sein:

a) Polycarbonsäuren mit 3, 4 oder 5, vorzugsweise 3 und 4 Carboxylgruppen bzw. deren Ester, insbesondere mit niederen Alkoholen mit 1 bis 4 C-Atomen, deren Anhydride oder Säurechloride,

b) Polyhydroxyverbindungen mit 3, 4 oder 5, vorzugsweise 3 Hydroxygruppen,

c) Hydroxycarbonsäuren mit insgesamt 3, 4 oder 5, vorzugsweise 3 und 4 Hydroxy- und Carbonsäuregruppen bzw. deren Derivate, insbesondere deren Ester mit niederen Akoholen mit 1 bis 4 C-Atomen.

Auch die vorstehend genannten Polycarbonsäuren mit 3, 4 oder 5, vorzugsweise 3 oder 4 Carboxylgruppen, die Polyhydroxyverbindungen oder die unter c) genannten Hydroxycarbonsäuren, können gegebenenfalls eine $SO_3M$-Gruppe tragen, wobei M ein Alkalimetall oder Ammonium bedeutet.

Geeignete verzweigende Polycarbonsäuren bzw. deren Derivate sind beispielsweise: Trimellithsäure, Trimesinsäure, Hemimellithsäure, Mellophansäure, Prehnitsäure, Pyromellithsäure, Aconitsäure, Tricarballylsäure, Äthantetracarbonsäure, Trimellithsäureanhydrid, Pyromellithsäuredianhydrid, Hemimellithsäureanhydrid, Mellophansäuredianhydrid, Prehnitsäureanhydrid, Trimellithsäuretrimethylester, Trimellithsäuretriäthylester, Trimesinsäuretrimethylester, Hemimellithsäuretrimethylester, Mellophan-

säuretetramethylester, Prehnitsäuretetramethylester, Pyromellithsäuretetramethylester, Pyromellithsäuretetraäthylester, 1,2,3-Cyclohexantricarbonsäure, 1,2,4-Cyclohexantricarbonsäure, 1,3,5-Cyclohexantricarbonsäure, Naphthalintricarbonsäuren.

Geeignete Polyhydroxyverbindungen sind z. B.: Glyzerin, Erythrit, Pentaerythrit, Trimethylolpropan, Trimethyloläthan.

Geeignete verzweigende Hydroxycarbonsäuren bzw. deren Derivate sind z. B. Zitronensäure, Apfelsäure, Weinsäure, Zitronensäuretrimethylester, Apfelsäuredimethylester, Weinsäuredimethylester.

Es werden insbesondere solche verzweigten wasserlöslichen bzw. in Wasser dispergierbaren Polyester verwendet, die bezogen auf 100 Mol-% der vorhandenen caboxylgruppentragenden Komponenten 1 bis 40 Mol-%, vorzugszweise 5 bis 40 Mol-% verzweigende Komponenten enthalten. Vorzugsweise bestehen auch von den vorhandenen Dicarbonsäurekomponenten mindestens 40 Mol-% aus Benzoldicarbonsäuren, insbesondere aus Isophthalsäure. Weiterhin ist es vorteilhaft, wenn die Verbindungen der hydroxylgruppentragenden Komponenten so ausgewählt werden, daß sie, bezogen auf 100 Mol-% der Di- und Polyole, mindestens zu 40 Mol-% aus Diäthylenglykol und/oder Triäthylenglykol bestehen.

Die benötigten wasserlöslichen bzw. in Wasser dispergierbaren linearen oder verzweigten sulfonatgruppenenthaltenden Polyester können auch dadurch erhalten werden, daß man die wasserlöslichmachenden Sulfonatgruppen in entsprechend ungesättigte Polyester einführt, indem man, z. B. gemäß der DT—OS 23 35 480 Bisulfit an Doppelbindungen enthaltende Polyester anlagert.

Die Bestimmung des scheinbaren mittleren Molekulargewichts erfolgt im Dampfdruckosmometer in Dimethylformamid als Lösungsmittel.

Wegen der Dissoziation der Sulfonatgruppen liegt das wirkliche Mittel des Molekulargewichts höher als der so gemessene, scheinbare Wert. Der Meßwert ist jedoch ein hinreichend genaues Kriterium zur Charakterisierung des Kondensationsgrades der erfindungsgemäßen Polymischester und zur Bestimmung des Endproduktes der Kondensation.

Die zur Herstellung des erfindungsgemäßen Egalisiermittels benötigten Äthoxylierungsprodukte des Rizinusöls sind zum Teil als Emulgatoren im Handel und werden in an sich bekannter Weise durch Umsetzung von Rizinusöl mit 5 bis 50 Molen Äthylenoxid erhalten. Durch einfaches gleichmäßiges Mischen der Polyesterkomponente A mit dem Athoxylierungsprodukt B im Gewichtsverhältnis 1 : (0,1 bis 5), vorzugsweise 1 : (0,5 bis 2) wird das erfingungsgemäße Egalisiermittel hergestellt. Nach dem Mischen der Komponenten A und B liegt normalerweise ein schwach saurer pH-Wert vor. Es ist zweckmäßig, den pH-Wert des Egalisiermittels durch Einrühren einer anorganischen oder organischen Base, wie z. B. Natronlauge, auf einen pH-Wert von 6 bis 7 einzustellen. Hierbei werden vorhandene COOH-Gruppen ganz oder zum Teil in die entsprechenden Salze COOM überführt, wobei M das Kation der Base, vorzugsweise ein Alkalimetall oder Ammonium ist.

Das erfindungsgemäße Egalisiermittel kann auch in Form einer Lösung, beispielsweise in Form einer 10 bis 50 gew.%igen, vorzugsweise 10 bis 30 gew.%igen, wäßrigen Lösung zur Anwendung kommen.

Nach dem erfindungsgemäßen Färbeverfahren können Materialien aus allen Synthesefasern, vorzugsweise jedoch Fasern aus linearen Polyestern, gleichmäßig gefärbt werden, die sich nach den üblichen HT-Ausziehverfahren mit wasserunlöslichen Dispersionsfarbstoffen färben lassen. Insbesondere ist das erfindungsgemäße Färbeverfahren auch für schwierig zu handhabende Farbstoffkombinationen bei texturiertem Material, bei Wickelkörpern und bei Schnellfärbeverfahren geeignet. Störungen der Flottenstabilität, Abfiltrationen, Unegalitäten, Tonverschiebungen und dgl. werden mit hoher Sicherheit verhindert. Überraschenderweise tritt durch den Zusatz des Äthoxylierungsproduktes ein synergistischer Effekt ein, so daß erheblich weniger von dem verhältnismäßig teuren Polyester eingesetzt werden muß. Besonders gute Ergebnisse erhält man bei Schnellfärbeverfahren. Bei derartigen Schnellfärbeverfahren werden der zu färbenden Ware bei Temperaturen von ca. 130°C plötzlich relativ große Farbstoffmengen angeboten. Die dadurch entstehende Gefahr von Unegalitäten wird durch die Anwendung des erfingungsgemäßen Egalisiermittels vermieden.

Zur Durchführung des erfingungsgemäßen Färbeverfahrens werden die Färbebäder wie üblich bei 50 bis 60°C angesetzt und durch pH regulierende Substanzen auf pH 4 bis 6 eingestellt. Dann wird das erfindungsgemäße Egalisiermittel gegebenenfalls in Form einer Lösung, in Mangen von 0,02 g/l bis 5 g/l, vorzugsweise 0,05 g/l bis 2 g/l (bezogen auf 100-%iges Egalisiermittel) zugesetzt. Es ist selbstverständlich aber auch möglich, der Färbeflotte die Polyesterkomponente und das Äthoxylierungsprodukt getrennt voneinander zuzusetzen.

Anschließend wird der vordispergierte, wasserunlösliche Dispersionsfarbstoff und das zu färbende Material zugegeben und auf die erforderliche Färbetemperature (Temperaturen bis ca. 130°C) aufgeheizt und die übliche Färbezeit lang gefärbt. Die Fertigstellung der Färbungen erfolgt in bekannter Weise z.B. durch reduktive Nachbehandlung.

Bei den besonders bevorzugten Schnellfärbeverfahren wird die Flotte getrennt von dem zu färbenden Material unter Zusatz des erfindungsgemäßen Polykondensats hergestellt. Die auf die Färbetemperatur von 120 bis 130°C erhitzte Flotte wird dann rasch in Kontakt mit dem zu färbenden Material gebracht. Falls nach der sogenannten Einschleustechnik gearbeitet wird, kann das erfindungsgemäße Polykondensationsprodukt auch dem Färbebad vor der Zugabe der Farbstoffdispersion zugegeben werden.

Polykondensationsprodukt auch dem Färbebad vor der Zugabe der Farbstoffdispersion zugegeben werden.

In den nachstehenden Beispielen werden folgende Abkürzungen gebraucht:

SPO = 5-Natriumsulfonatopropoxy-isophthalsäuredimethylester
DMT = Dimethylterephthalat
IPA = Isophthalsäure
DEG = Diäthylenglykol
PEG = Polyäthylenglykol
AEO = Äthylenoxid
SIM = 5-Natriumsulfonato-isophthalsäuredimethylester
PMSA = Pyromellithsäuredianhydrid

Beispiel 1

(10 Mol-% SPO, 40 Mol-% DMT, 50 Mol-% IPA, 100 Mol-% DEG, 10 Mol-% PEG 600, gleiche Menge Äthoxylierungsprodukt aus 1 Mol Rizinusöl und 30 Mol AEO).

In einem 4-Liter-Schliffvierhalskolben mit Rührer, Thermometer, Gaseinleitungsrohr und absteigendem Kühler werden 132, 5 g Diäthylenglykol (1,25 Mol), 75 Polyäthylenglykol 600 (0,125 Mol), 97 g Terephthalsäuredimethylester (0,5 Mol), 44,25 g 5-Natriumsulfonatopropoxy-isophthalsäuredimethylester (0,125 Mol) und 2 g Titantetraisopropylat unter Stickstoffatmosphäre im Laufe einer Stunde auf 150°C geheizt. Dabei destillieren etwa 12 g Methanol ab. Die Temperatur der Schmelze wird im Laufe einer Stunde auf 160°C und danach im Laufe einer weiteren Stunde auf 170°C gesteigert. Dabei destillieren nochmals ca. 18 g Methanol ab. Nun werden der Schmelze 103,75 g Isophthalsäure vom Reinheitsgrad 99% zugemischt, und unter ständigem Überleiten eines schwachen Stickstoffstroms wird anschließend die Temperatur stündlich um 10°C erhöht, bis nach 5 Stunden 220°C erreicht sind. Dabei destillieren allmählich ca. 20 g Wasser, das noch etwas Methanol enthält, ab. Nun wird noch 4 Stunden unter Stickstoff auf 220 bis 225°C erhitzt, wobei, wie während der gesamten Reaktion, die Schmelze ständig kräftig gerührt werden muß. Dann wird ein Wasserstrahlvakuum von ca. 13 mbar angelegt und solange bei 220 bis 225°C weitergerührt, bis das scheinbare mittlere Molekulargewicht einen Wert von ca. 2000 erreicht hat, was nach ca.

6 Stunden der Fall ist. Hierbei destilliert auch des überschüssige Diäthylenglykol ab. Man erhält 380 g einer hochviskosen, bernsteinfarbenen Schmelze, in die man bei 140 bis 150°C vorsichtig (Luftausschluß) die gleiche Gewichtsmenge des flüssigen, handelsüblichen Anlagerungsprodukts von 30 Molen Äthylenoxid an 1 Mol Ricinusöl einrührt.

Es entstehen 760 g einer bernsteinfarbenen Mischung, die sich nach dem Abkühlen leicht mit 1520 g Wasser zu 2280 g einer 33 %igen wässrigen Lösung verdünnen lassen (= 20 %ig in Bezug auf den Polyestergehalt). Durch Zugabe von wenig 25 %iger Natronlauge wird neutralisiert. Anschließend kann man eine geringe Trübung leicht beseitigen durch Vermischen mit 1 Gew.% Kieselgur und Abpressen über ein Druckfilter.

Beispiel 2

Das gleiche Produkt wie in Beispiel 1 erhält man auch, wenn man die Polyesterschmelze des Beispiels 1 mit Wasser auf 1900 g einer 20 %igen Lösung verdünnt, neutralisiert und dann 380 g des handelsüblichen Anlagerungsprodukts von 30 Molen Äthylenoxid an 1 Mol Ricinusöl einrührt und homogen verteilt.

Beispiel 3

Ein ähnlich gut wirksames Produkt erhält man, wenn man in Beispiel 1 anstelle des Additionsproduktes von 30 Mol AEO an 1 Mol Rizinusöl die gleiche Gewichtsmenge eines Additionsproduktes von 50 Mol AEO an 1 Mol Ricinusöl einsetzt.

Beispiel 4

Ein ähnlich gut wirksames Produkt erhält man, wenn man in Beispiel 1 anstelle des Additionsproduktes von 30 Mol AEO an 1 Mol Rizinusöl die gleiche Gewichtsmenge eines Additions-produktes von 15 Mol AEO an 1 Mol Ricinusöl einsetzt.

Beispiel 5

Eine deutlich feststellbare Verbesserung der Egalisierwirkung erhält man auch schon, wenn man in Beispiel 2 nur 76 g des Additionsproduktes von 30 Mol AEO an 1 Mol Ricinusöl zusetzt, was eine 23 %ige Lösung, bezogen auf Feststoffgehalt, ergibt.

Beispiel 6

Eine deutlich faststellbare Verbesserung der Egalisierwirkung erhält man auch schon, wenn man in Beispiel 2 nur 76 g des Additionsproduktes von 5 Mol AEO an 1 Mol Ricinusöl einsetzt.

Beispiel 7

Ein noch besser egalisierendes Produkt als in Beispiel 1 erhält man, wenn man in Beispiel 1 2 760 g des Anlagerungsproduktes von 30 Mol AEO an 1 Mol Ricinusöl einsetzt, wobei die Konzentration, bezogen auf den Festgehalt, auf ca. 43% ansteigt.

Beispiel 8

Ein sehr gut egalisierendes Produkt erhält man auch, wenn man in Beispiel 1 1900 g des Anlagerungsproduktes von 30 Mol AEO an 1 Mol Ricinusöl anstelle von 380 g zusetzt.

Beispiel 9

(15 Mol-% SIM, 75 Mol-% IPA, 10 Mol-% PMSA, 100 Mol-% DEG, gleiche Menge Anlagerungsprodukt aus 1 Mol Ricinusöl und 30 Mol AEO).

In der gleichen Versuchsapparatur, wie in Beispiel 1 beschrieben, werden 159 g Diäthylenglykol (1,5 Mol), 66,6 g 5-Natriumsulfonatoisophthalsäuredimethylester (0,225 Mol), 32,7 g Pyromellithsäuredianhydrid (0,15 Mol) und 186,6 g 99 %ige Isophthalsäure (1,125 Mol) gut verrührt und unter Stickstoffatmosphäre im Laufe einer Stunde auf 150°C geheizt. Die Temperatur wird dann stündlich um 10°C gesteigert, bis nach 5 Stunden 200°C erreicht sind. Nun wird solange bei dieser Temperatur weitergeheizt, bis sich eine Probe klar in Wasser löst, also keine pulvrige Isophthalsäure mehr abscheidet. Dies ist nach etwa 2 Stunden der Fall, und das scheinbare mittlere Molekulargewicht beträgt dann ca. 800 bei einer Säurezahl von 90. Man rührt nun die gleiche Menge eines Additionsproduktes von 30 Mol Äthylenoxid an 1 Mol Ricinusöl in die vorliegenden 328 g Schmelze ein, läßt bis 110°C abkühlen und verdünnt mit 1312 ml Wasser auf 1640 g Ausbeute = 20 %ig, bezogen auf Polyesterschmelze, 33 %ig, bezogen auf Feststoffgehalt, Das Produkt wird mit etwa 40 ml 25 %iger Natronlauge neutralgestellt.

Beispiele 10

Das gleiche Produkt wie in Beispiel 9 kann man auch erhalten, wenn man die 328 g Polyesterschmelze zuerst mit 1312 ml Wasser zu einer klaren, bernsteinfarbenen, 20 %igen Lösung verdünnt, mit Natronlauge neutralisiert und nachträglich 328 g des Additionsproduktes von 30 Mol AEO an 1 MOl Ricinusöl homogen einrührt.

Beispiel 11

Wickelkörper ("Muffs") aus texturierten Polyestergarnen werden auf einem HT-Färbeapparat bei einem Flottenverhältnis von 1:10 mit einer Flotte von 130°C durchströmt, die aus weichem Wasser von pH 4,5 (eingestellt mit Essigsäure) und einem Zusatz von 1,5 g/l eines erfindungsgemäßen Egalisiermittels besteht. Das Egalisiermittel besteht aus einem linearen, wasserlöslichen Polyester vom Molgewicht 2500, der gemäß Beispiel 1 durch Polykondensation aus

| | |
|---|---|
| Isophthalsäure | 50 Mol-% |
| Dimethylterephthalat | 40 Mol-% |
| 5-Natriumsulfonatopropoxy-isophthalsäure-dimethylester | 10 Mol-% |
| Diäthylenglykol | 100 Mol-% und |
| Polyglykol-MG 600 | 10 Mol-% |

hergestellt wurde und dem die gleiche Gewichtsmenge eines Anlagerungsproduktes von 30 Mol AEO an 1 Mol Ricinusöl zugemischt worden ist. Die Mischung wurde, wie in Beispiel 1 angegeben, mit Wasser verdünnt.

Dieser Flotte wird mittels eines Einschleusgeräts ein mit Wasser von 40°C vordispergiertes Gemisch der folgenden Dispersionsfarbstoffe in handelsüblicher Form rasch zugesetzt: 0,46 Gew.-% des Farbstoffs der Formel

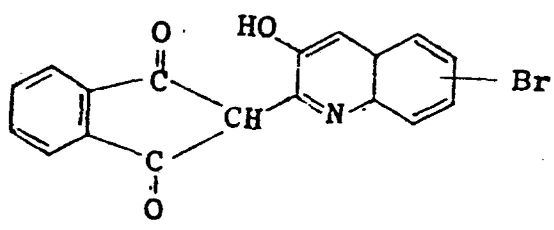

0,52 Gew.% des Farbstoffs der Formel

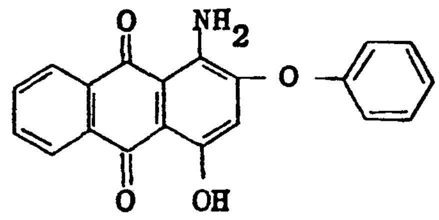

0,17 Gew.% des Farbstoffs der Formel (aus gleichen Teilen)

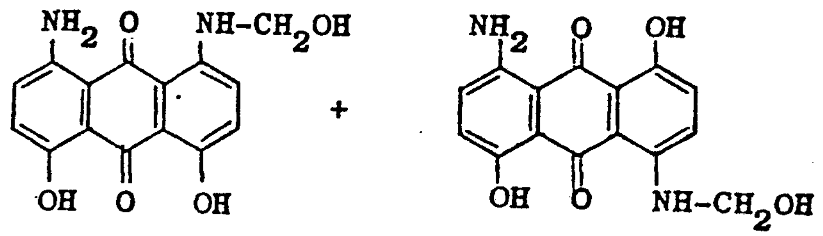

Die Durchström-Menge durch den Muff liegt bei 20 l/kg in der Minute. Nach 30 Minuten Behandlung bei 130°C wird abgekühlt, die Flotte abgelassen und das gefärbte Material reduktiv gereinigt.

Es resultiert eine vollkommen egale Braunfärbung hoher Reibechtheit mit voller Farbstoffausbeute.

Führt man die Färbung mit den gleichen Farbstoffen unter gleichen Bedingungen durch, jedoch ohne dem zugesetzten Polyester das Additionsprodukt von 30 Mol AEO an 1 Mol Ricinusöl einzumischen, so benötigt man davon für den gleichen Effekt 2 g/l.

Führt man die Färbung mit den gleichen Farbstoffen unter den gleichen Bedingungen, jedoch mit der Abänderung durch, daß man als Egalisiermittel der Flotte 2 g/l des Additionsproduktes von 30 Mol AEO an 1 Mol Ricinusöl zusetzt, so erhält man nur eine unegale Färbung mit schlechter Reibechtheit. Dieses Oxäthylierungsprodukt hat für sich selbst also nur eine sehr geringe Egalisierwirkung.

**Patentansprüche**

1. Egalisiermittel, bestehend aus einem Gemisch von

A) einem in Wasser löslichen oder dispergierbaren linearen oder verzweigten Polyester mit einem durchschnittlichen Molekulargewicht von 600 bis 5000, der durch Polykondensation von

a) 100 Mol-% einer oder mehrerer gesättigten oder ungesättigten aliphatischen, cycloaliphatischen oder aromatischen Di- und gegebenenfalls Polycarbonsäure(n) mit

b) 90 bis 120 Mol-% eines oder mehrerer gesättigten oder ungesättigten aliphatischen, cycloaliphatischen oder araliphatischen Di- und gegebenenfalls Polyols(Polyole) und/oder äthergruppenhaltigen gesättigten aliphatischen, cycloaliphatischen oder araliphatischen Diols(Diole) erhalten worden ist und wobei 5 bis 40 Mol-% aller Di- und Polycarbonsäure- oder Di- oder Polyolkettenglieder Sulfogruppen in Form von Salzen tragen, und

B) einem mit 5 bis 50 Mol Äthylenoxid oxäthylierten ricinusöl im Gewichtsverhältnis A:B = 1:(0,1 bis 5).

2. Egalisiermittel nach Anspruch 1, dadurch gekennzeichnet, daß der Polyester A ein linearer Polyester ist.

3. Egalisiermittel nach den Ansprüchen 1 und 2, dadurch gekennziechnet, daß in dem Polyester 5 bis 30 Mol-% aller Di- und Polycarbonsäure- oder Di- oder Polyolkettenglieder Sulfogruppen in Form von Salzen tragen.

4. Egalisiermittel nach den Ansprüchen 1 bis 3, dadurch gekennzeichnet, daß der Polyester die allgemeine Formel

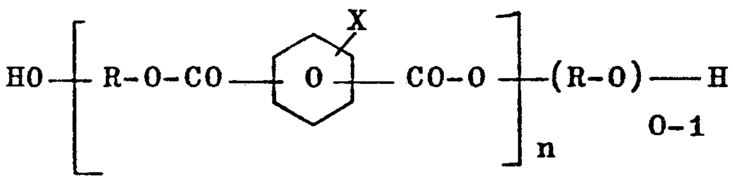

besitzt, worin n eine so große Zahl ist, daß das durchschnittliche Molekulargewicht des Polyesters zwischen 600 und 5000 liegt, X ein Wasserstoffatom oder eine Gruppe der Formel

$$—O—CH_2—CH_2—CH_2—SO_3M \text{ oder } —SO_3M$$

bedeutet, in welcher M ein Alkalimetallatom, insbesondere Natrium, oder eine Ammonium- oder substituierte Ammoniumgruppe, insbesondere Triäthanolammonium, darstellt und in der R ein Diol-Radikal mit 2 bis 10 Kohlenstoffatomen einer gesättigten oder ungesättigten aliphatischen, cycloaliphatischen oder araliphatischen Verbindung und/oder einer äthergruppenhaltigen gesättigten aliphatischen, cycloaliphatischen oder araliphatischen Verbindung mit 2 bis 10 Kohlenstoffatomen in den aliphatischen Teilen zwischen zwei Sauerstoffatomen ist.

5. Egalisiermittel nach den Ansprüchen 1 bis 4, dadurch gekennzeichnet, daß von den Phenylenresten des Polyesters 10 bis 20 Mol-% durch Ein-kondensieren von 5-Natriumsulfonatopropoxyisophthalsäure-dimethylester oder 5-Natriumsulfonatoisophthalsäuredimethylester, 40 bis 90 Mol-% durch Ein-kondensieren von Isophthalsäure oder ihrer Derivate und 0 bis 40 Mol-% durch Einkondensieren von Terephthalsäure, bevorzugt in Form des Dimethylesters, erhalten worden sind.

6. Egalisiermittel nach den Ansprüchen 1 bis 5, dadurch gekennzeichnet, daß bei der Herstellung des Polyesters 40 bis 95 Mol-% der eingesetzten Diole Diäthylenglykol und/oder Triäthylenglykol und 5 bis 60 Mol-% der eingesetzten Diole andere Diole, bevorzugt Polyäthylenglykole vom durchschnittlichen Molekulargewicht 300 bis 1000 sind.

7. Egalisiermittel nach Anspruch 1, dadurch gekennzeichnet, daß der Polyester ein verzweigter Polyester ist und, bezogen auf 100 Mol-% der vorhandenen carboxylgruppentragenden Komponenten, 1 bis 40 Mol-% verzweigende Komponenten enthält.

8. Egalisiermittle nach den Ansprüchen 1 und 7, dadurch gekennzeichnet, daß der Polyester ein verzweigter Polyester ist und, bezogen auf 100 Mol-% der vorhandenen carboxylgruppentragenden Komponenten, 5 bis 40 Mol-% verzweigende Komponenten enthält.

9. Egalisiermittle nach den Ansprüchen 1, 7 und 8 dadurch gekennzeichnet, daß ein Polyester verwendet wird, bei dessen Herstellung, bezogen auf 100 Mol-% der hydroxylgruppentragenden Komponenten, mindestens 40 Mol-% Diäthylenglykol und/oder Triäthylenglykol eingesetzt werden.

10. Egalisiermittle nach den Ansprüchen 1 bis 9, dadurch gekennzeichnet, daß das Gewichtsverhältnis von A:B = 1:(0,5 bis 2) beträgt.

11. Egalisiermittle nach den Ansprüchen 1 bis 10, dadurch gekennzeichnet, daß es in Form einer 10 bis 50 gew.%igen, vorzugsweise 10 bis 30 gew.%igen wäßrigen Lösung vorleigt.

12. Verfahren zum gleichmäßigen Färben von Fasermaterialien aus Synthesefasern und deren Mischungen mit natürlichen Fasern mit Dispersionsfarbstoffen nach der Ausziehmethode, wobei den wäßrigen Färbebädern neben den Farbstoffen pH-regulierende Substanzen und Egalisiermittel zugesetzt werden, dadurch gekennzeichnet, daß das Egalisiermittel der Ansprüche 1 bis 11 in Mengen von 0,02 bis 5 g/l, vorzugsweise in Mengen von 0,05 bis 2 g/l, bezogen auf 100%iges Egalisiermittel, zugesetzt wird.

13. Verfahren nach Anspruch 12, dadurch gekennzeichnet, daß es als Schnellfärbeverfahren durchgeführt wird.

## Revendications

1. Agent d'unisson constitué d'un mélange:

A) d'un polyester linéaire ou ramifié, soluble ou dispersable dans l'eau, ayant un poids moléculaire moyen de 600 à 5000, qui a été obtenu par polycondensation:

a) de 100% en moles d'un ou plusieurs acides di- et éventuellement poly-carboxyliques aromatiques, cycloaliphatiques ou aliphatiques saturés ou insaturés, avec

b) de 90 à 120% en moles d'un ou plusieurs di- et éventuellement polyols araliphatiques, cycloaliphatiques ou aliphatiques, saturés ou insaturés, et/ou diols araliphatiques, cycloaliphatiques ou aliphatiques saturés contenant des groupes éthers,;

de 5 à 40% moles de tous les maillons acides di- et poly-carboxyliques ou di- et polyols portant des groupes sulfo sous la forme de sels, et

B) d'une huile de ricin éthoxylée avec de 5 à 50 moles d'oxyde d'éthylène, le rapport pondéral A:B étant de 1:(0,1 à 5).

2. Agent d'unisson selon la revendication 1 caractérisé en ce que le polyester A est un polyester linéaire.

3. Agent d'unisson selon l'une des revendications 1 et 2, caractérisé en ce que, dans le polyester, de 5 à 30% en moles de tous les motifs d'acides di- et poly-carboxyliques ou de di- et polyols portent des groupes sulfo sous la forme de sels.

4. Agent d'unisson selon l'une quelconque des revendications 1 à 3, caractérisé en ce que le polyester répond à la formule générale

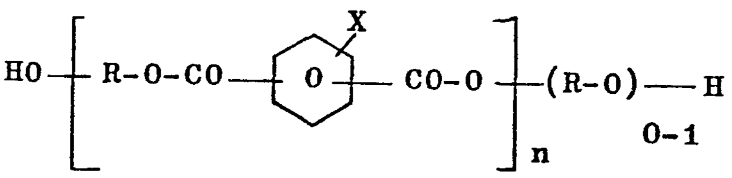

dans laquelle

n désigne un nombre entier tel que le poids moléculaire moyen du polyester soit compris entre 600 et 5000,

X représente un atome d'hydrogène ou un radical répondans à l'une des formules:

$$—O—CH_2—CH_2—CH_2—SO_2M \text{ et } —SO_3M$$

dans lesquelles M représente un atome de métal alcalin, plus particulièrement de sodium, ou un groupe ammonium ou ammonium substitué, plus particulièrement triéthanolammonium, et

R représente un radical, provenant d'un diol en $C_2—C_{10}$, d'un composé araliphatique, cycloaliphatique ou aliphatique saturé ou insaturé et/ou d'un composé araliphatique, cycloaliphatique ou aliphatique saturé contenant des groupes éthers et renfermant de 2 à 10 atomes de carbone dans chacune des parties aliphatiques comprises entre deux atomes d'oxygène.

5. Agent d'unisson selon l'une quelconque des revendications 1 à 4, caractérisé en ce que, dans l'ensemble des radicaux phénylènes du polyester, de 10 à 20% en moles ont été introduits par condensation, dans la molécule, de (sodium-sulfonato-propoxy)-5 isophtalate de diméthyle ou de isophtalate de diméthyle, de 40 à 90% en moles par condensation d'acide isophtalique ou d'un de ses dérivés, et de 0 à 40% en moles par condensation d'acide téréphtalique, de préférence sous la forme de son ester diméthylique.

6. Agent d'unisson selon l'une quelconque des revendications 1 à 5, caractérisé en ce que, dans la préparation du polyester, de 40 á 95% en moles des diols mis en jeu sont le diéthylène-glycol et/ou le triéthylène-glycol, et de 5 à 60% en moles des diols mis en jeu sont d'autres diols, de préférence des polyéthylène-glycols de poids moléculaire moyen compris entre 300 et 1000.

7. Agent d'unisson selon la revendication 1 caractérisé en ce que le polyester est un polyester ramifié et contient, pour 100% en moles des composantes porteuses de groupes carboxy présentes, de 1 à 40% en moles de composantes ramifiantes.

8. Agent d'unisson selon l'une quelconque des revendications 1 à 7, caractérisé en ce que le polyester est un polyester ramifié et contient, pour 100% en moles des composantes porteuses de groupes carboxy présentes, de 5 à 40% en moles de composantes ramifiantes.

9. Agent d'unisson selon l'une quelconque des revendications 1, 7 et 8, caractérisé en ce qu'on utilise un polyester pour la préparation duquel on a utilisé, pour 100% en moles des composantes porteuses de groupes hydroxy, au moins 40% en moles de diéthylène-glycol et/ou de triéthylène-glycol.

10. Agent d'unisson selon l'une quelconque des revendications 1 à 9, caractérisé en ce que le rapport pondéral A:B est de 1:(0,5 à 2).

11. Agent d'unisson selon l'une quelconque des revendications 1 à 10, caractérisé en ce qu'il est sous la forme d'une solution aqueuse d'une concentration de 10 à 50% en poids, de préférence de 10 à 30% en poids.

12. Procédé pour réaliser des teintures bien unies avec des colorants de dispersion, par la méthode d'épuisement, sur des matières fibreuses constituées de fibres synthétiques et de leurs mélanges avec des fibres naturelles, les bains de teinture aqueux mis en jeu contenant, en plus des colorants, des substances régulatrices de pH et un agent d'unisson, procédé caractérisé en ce que l'agent d'unisson selon l'une quelconque des revendications 1 à 11 est ajouté en des quantités de 0,02 à 5 g/litre, de préférence de 0,05 à 2 g/litre, relativement à l'agent d'unisson à 100%.

13. Procédé selon la revendication 12, caractérisé en ce qu'il est effectué en tant que procédé de teinture rapide.

**Claims**

1. Levelling agent consisting of a mixture of

A. a linear or branched polyester being soluble or dispersible in water and having an average molecular weight of 600 to 5000, and being obtained from the polycondensation of

a) 100 moles percent of one or several saturated or unsaturated aliphatic, cycloaliphatic or aromatic dicarboxylic acids and optionally polycarboxylic acids, with

b) 90 to 120 moles percent of one or several saturated or unsaturated aliphatic, cycloaliphatic or araliphatic diols and optionally polyols,

wherein 5 to 40 moles percent of all dicarboxylic and polycarboxylic acid chain members or diol or polyol chain members carry sulpho groups in the form of salts, and

B. a castor oil oxethylated with 5 to 50 moles of ethylene oxide in a weight ratio of A:B = 1:(0.1 to 5).

2. Levelling agent according to claim 1, characterised in that the polyester A is a linear polyester.

3. Levelling agent according to claims 1 and 2, characterised in that in the polyester 5 to 30 moles percent of all dicarboxylic and polycarboxylic acid chain members or diol or polyol chain members carry sulpho groups in the form of salts.

4. Levelling agent according to claims 1 to 3, characterised in that the polyester has the general formula

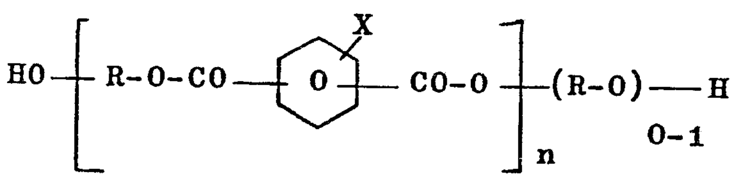

wherein n is a number sufficiently large that the average molecular weight of the polyester is between 600 and 5000, X is a hydrogen atom or is selected from the group consisting of

$$—O—CH_2—CH_2—CH_2—SO_3M \text{ and } SO_3M,$$

wherein M is selected from the group consisting of alkali metal, in particular sodium, ammonium and substituted ammonium, in particular triethanol ammonium, and R is a diol moiety, having 2 to 10 carbon atoms, of a saturated or unsaturated aliphatic, cycloaliphatic or araliphatic compound and/or a saturated aliphatic, cycloaliphatic or araliphatic compound containing ether groups and having 2 to 10 carbon atoms in the aliphatic portions between two oxygen atoms.

5. Levelling agent according to claims 1 to 4, characterised in that of the phenylene moieties of the polyester 10 to 20 moles percent have been obtained by co-condensing dimethyl 5-sodium sulphonatopropoxyisophthalate or dimethyl 5-sodium sulphonatoisophthalate, 40 to 90 moles percent by co-condensing isophthalic acid or its derivatives and 0 to 40 moles percent by co-condensing terephthalic acid, preferably in the form of the dimethyl ester.

6. Levelling agent according to claims 1 to 5, characterised in that in the preparation of the polyester 40 to 95 moles percent of the diols employed are diethylene glycol and/or triethylene glycol and 5 to 60 moles percent of the diols employed are other diols, preferably polyethylene glycol having an average molecular weight of 300 to 1000.

7. Levelling agent according to claim 1, characterised in that the polyester is a branched polyester and contains 1 to 40 moles percent of branching components, relative to 100 moles percent of the components present carrying carboxyl groups.

8. Levelling agent according to claims 1 and 7, characterised in that the polyester is a branched polyester and contains 5 to 40 moles percent of branching components, relative to 100 miles percent of the components present carrying carboxyl groups.

9. Levelling agent according to claims 1, 7 and 8, characterised in that a polyester is used in the preparation of which at least 40 moles percent of diethylene glycol and/or triethylene glycol are employed, relative to 100 moles percent of the components present carrying hydroxyl groups.

10. Levelling agent according to claims 1 to 9, characterised in that the weight ratio of A:B is 1:(0.5 to 2).

11. Levelling agent according to claims 1 to 10, characterised in that it is present in the form of a 10 to 50% by weight, preferably 10 to 30% by weight, aqueous solution.

12. Process for the even dyeing of synthetic fibre material and mixtures of synthetic fibre material and natural fibres with dispersion dyestuffs using the exhaust method, in which, besides the dyestuffs, there are added to the aqueous dye baths agents to regulate the pH and levelling agents, characterised in that the levelling agent of claims 1 to 11 is added in quantities of 0.02 to 5 g/litre, preferably in quantities of 0.05 to 2 g/litre, relative to 100% levelling agent.

13. Process according to claim 12, characterised in that it is carried out as a rapid dyeing process.